# EUROPÄISCHE PATENTSCHRIFT

(11) **EP 3 952 653 B1**
(45) Veröffentlichungstag und Bekanntmachung des Hinweises auf die Patenterteilung: **23.10.2024**
(21) Anmeldenummer: 20715804.9
(22) Anmeldetag: 26.03.2020
(51) Int. Cl.: A01N 45/00, A01P 11/00, A01N 65/16, A01M 23/00, A01M 25/00

(54) **MITTEL ZUR BEKÄMPFUNG VON NAGETIEREN**
MEANS FOR RODENT CONTROL
MOYEN POUR CONTRÔLER LES RONGEURS

(30) Priorität: 08.04.2019 AT 503052019
(43) Veröffentlichungstag der Anmeldung: 16.02.2022
(73) Patentinhaber: UK3M Green Rodenticide GmbH, 39012 Meran (BZ) (IT)
(72) Erfinder: GASSER, Klaus, 39010 Gargazon (IT)
(74) Vertreter: Puchberger & Partner Patentanwälte
(86) Internationale Anmeldenummer: PCT/EP2020/058522
(87) Internationale Veröffentlichungsnummer: WO 2020/207809

(56) Entgegenhaltungen:
- WO-A1-2018/002292
- .: "Technical report on the outcome of the consultation with Member States and EFSA on the basic substance application for honey from rhododendron for use in plant protection as rodenticide", EFSA SUPPORTING PUBLICATIONS, vol. 14, no. 1, 17 January 2017 (2017-01-17), pages 1 - 54, XP055694608, ISSN: 2397-8325, DOI: 10.2903/sp.efsa.2017.EN-1155
- FILIZ ONAT ET AL: "Site of action of grayanotoxins in mad honey in rats", JOURNAL OF APPLIED TOXICOLOGY., vol. 11, no. 3, 1 June 1991 (1991-06-01), GB, pages 199 - 201, XP055694640, ISSN: 0260-437X, DOI: 10.1002/jat.2550110308
- .: "Rhododendron Verkaufsqualitäten", 1 January 2020 (2020-01-01), Wiefelstede, Germany, pages 1 - 1, XP055694682, Retrieved from the Internet <URL:www.schroeder-rhododendron.de> [retrieved on 20200513]
- UNBEKANNT: "Vergiftungsfälle durch Grayanotoxine in Rhododendron-Honigen aus der türkischen Schwarzmeerregion", 3 September 2010 (2010-09-03), XP055410737, Retrieved from the Internet <URL:http://www.bfr.bund.de/cm/343/vergiftungsfaelle_durch_grayanotoxine_in_rhododendron_honigen_aus_der_tuerkischen_schwarzmeerregion.pdf> [retrieved on 20170927]
- DATABASE BIOSIS [online] BIOSCIENCES INFORMATION SERVICE, PHILADELPHIA, PA, US; 1984, SHI Y ET AL: "A PRELIMINARY STUDY ON DUSHULING AS A RODENTICIDE", XP055695076, Database accession no. PREV198579024655
- SHI Y ET AL: "A PRELIMINARY STUDY ON DUSHULING AS A RODENTICIDE", ACTA THERIOLOGICA SINICA, vol. 4, no. 1, 1984, pages 63 - 68, ISSN: 1000-1050
- H M BURKILL: "Agauria salicifolia (Comm.) Hook. f. [family ERICACEAE]", GLOBAL PLANTS - USEFUL PLANTS OF WEST TROPICAL AFRICA, 1 January 1985 (1985-01-01), pages 1 - 2, XP055695150, Retrieved from the Internet <URL:https://plants.jstor.org/stable/10.5555/al.ap.upwta.2_37> [retrieved on 20200514], DOI: 10.5555/al.ap.upwta.2_37
- "Veterinary Medicine", 1 January 2017, ELSEVIER LTD., ISBN: 978-0-7020-5246-0, article .: "Plant toxins affecting the alimentary tract", pages: 427 - 429, XP055695167
- ZUWANG WANG: "ACUTE RODENTICIDES IN THE CONTROL OF RODENT PEST IN CHINA: A REVIEW", PROCEEDINGS OF THE ELEVENTH VERTEBRATE PEST CONFERENCE, 1 January 1984 (1984-01-01), pages 54 - 63, XP055695224, Retrieved from the Internet <URL:https://digitalcommons.unl.edu/cgi/viewcontent.cgi?referer=https://www.google.com/&httpsredir=1&article=1042&context=vpc11> [retrieved on 20200514]

## Beschreibung

Die Erfindung betrifft ein Mittel zur Bekämpfung von Schädlingen, insbesondere von Nagetieren wie Mäusen.

Nagetiere, wie Mäuse und Ratten, sind Kulturfolger des Menschen und suchen beispielsweise direkt in den Aufbewahrungsorten von Lebensmitteln nach Nahrung. Weiters halten sich Nagetiere auch bevorzugt in den zur Nahrungsmittelproduktion genutzten Flächen auf, wo sie die Feldfrüchte selbst verzehren oder durch ihre unterirdische Lebensweise an Wurzeln und Knollen der Pflanzen Schäden anrichten. In Indonesien gehen beispielsweise 17 % der Reisernte durch Nagetiere verloren. All dies bedeutet große materielle Schäden, wozu noch Begleitschäden kommen, wie Schäden an Dämmmaterialien, an Strom- und Wasserleitungen, etc..

Neben den materiellen Schäden, die Nagetiere anrichten, sind einige Arten auch als Überträger von Krankheiten bekannt, und stellen so eine Bedrohung für den Menschen dar. Durch Bisse können unter anderen Pasteurellose und Tollwut übertragen werden. Durch die Exkremente der Nagetiere kann es unter anderem zur Übertragung von Salmonellose und Leptospirose, sowie von hämorrhagischem Fieber kommen. Die wohl bekanntesten Krankheiten sind jene, die von auf den Nagetieren parasitierenden Flöhen übertragen werden, wie das murine Fleckfieber und die Pest.

Die Bekämpfung oder zumindest Eindämmung der Population an Nagetieren ist daher ein Ziel der Schädlingsbekämpfung und auch des Pflanzenschutzes und stellt ein wichtiges Element der Hygienevorsorge dar.

Mausbekämpfungsmittel mit Fraßködern sind seit längerer Zeit bekannt. Weit verbreitet sind als Wirkstoff die Cumarine, die als Antikoagulanzien aus der Gruppe der Vitamin-K-Antagonisten die Blutgerinnung hemmen. Diese haben den Vorteil, dass die toxische Wirkung nicht unmittelbar nach der Nahrungsaufnahme eintritt, sondern erst zu einem späteren Zeitpunkt, wenn sich die bekämpften Nager zurückziehen und daher nicht neben dem Fraßköder liegen bleiben.

Die zuständigen Behörden bewerten Antikoagulanzien als Rodentizide inzwischen sehr kritisch. Zum einen kann es zu Resistenzen der bekämpften Nagerpopulation kommen. Zum anderen können umweltgefährliche Eigenschaften auftreten, wie Persistenz oder Bioakkumulation. Weiters kann aufgrund innerer Blutung bei den Tieren schweres und einige Tage dauerndes Tierleid verursacht werden. Überdies wirken diese Wirkstoffe nicht nur gegen die Nagetiere, sondern auch auf Raubtiere, wie Eulen, Mäusebussarde, Steinadler, Füchse und Iltisse, für die Mäuse als Futter dienen. Weiters können auch samen- und körnerfressende Vögel betroffen sein, wenn diese die Fressköder direkt fressen.

Im Stand der Technik ist es aus der WO 2018/002292 A1 bekannt, Grayanotoxine zur Schädlingsbekämpfung einzusetzen. In ähnlicher Weise ist in Y. Shi et al., A Preliminary Study on Dushuling as a Rodenticide, Acta Theriologica Sinica, Bd. 4, Nr. 1, 1984, S. 63-68, ISSN: 1000-1050 die Verwendung von Grayanotoxin-haltigen Extrakten beschrieben. Der Artikel H. M. Burkill, Agauria salicifolia (Comm.) Hook. f. [family ERICACEAE], Global Plants - Useful Plants of West Tropical Africa, 1.1.1985, S. 1-2 gibt an, dass die Wurzeln von Agauria salicifolia toxisch sind.

Die vorliegende Erfindung hat sich zur Aufgabe gemacht, ein Mittel zur Bekämpfung von Nagetieren, wie Mäusen, zu schaffen, welches aus der Natur stammt, biologisch ist, sicher wirksam ist, und begrenzte oder keine Umweltschädlichkeit verursacht. Ein weiteres Ziel ist darin gegeben, wenn das Mittel leicht anwendbar und kostengünstig ist.

Weiters soll das erfindungsgemässe Mittel zu dessen Anwendung möglichst naturnah, also möglichst ohne chemisch künstlich hergestellte Wirkstoffe vorliegen. Weiters soll das Mittel für die Lagerung und den Verkauf über den in der Praxis nötigen Zeitraum gut verfügbar sein. Die Anwendung soll für einen Landarbeiter durchführbar sein.

Das erfindungsgemäße Mittel weist die Merkmale des Anspruchs 1 auf. Gegebenenfalls ist vorgesehen, dass das Pflanzengewebe von einer Pflanze aus der Familie Ericaceae, insbesondere aus der Gattung Rhododendron, stammt.

Gegebenenfalls ist vorgesehen, dass als Pflanzengewebe keimfähige Abschnitte einer Rhododendronpflanze, wie Wurzel, Stängel, Blatt und/oder Blüte vorgesehen ist. Gegebenenfalls ist vorgesehen, dass das Grayanotoxin oder die Mischung aus Grayanotoxinen im Pflanzengewebe mit einem Gehalt von wenigstens 0,0005 Gew.-%, bevorzugt zwischen 0,0005 Gew.-% und 2 Gew.-%, enthalten ist.

Gegebenenfalls ist vorgesehen, dass wenigstens ein Schlupfloch durch einen entfernbaren Verschluss abgedeckt ist.

Gegebenenfalls ist vorgesehen, dass das Behältnis eine wasserfeste Bodenschale aufweist, die oben von einem Deckel oder einer Folie abgeschlossen ist und wobei das Behältnis mit Inhalt für den Transport stapelbar ist.

Gegebenenfalls ist vorgesehen, dass das Behältnis und der Deckel im Erdboden bei Feuchtigkeit zersetzbar ist, um das An- und Auswachsen des Pflanzengewebes zu ermöglichen.

Gegebenenfalls ist vorgesehen, dass wenigstens ein Teil des Pflanzengewebes abgestorbenes, nicht mehr wachstumsfähiges Pflanzengewebe ist.

Weitere Merkmale sind den Ansprüchen und der Beschreibung zu entnehmen. Untersuchungen und länger dauernde Feldversuche haben überraschend ergeben, dass der Wirkstoff Grayanotoxin gute Eigenschaften als Rodentizid aufweist. Die Grayanotoxine sind in der Literatur erschöpfend beschrieben und die chemischen Formeln bekannt. Es hat sich gezeigt, dass Wirkungen des Mittels schon bei geringer Konzentration des Wirkstoffes eintreten. Die letale Dosis für Grayanotoxin 1 beträgt bei Mäusen etwa 5,1 mg pro kg Lebendgewicht und für Grayanotoxin 3 etwa 4,9 mg pro kg Lebendgewicht. Eine Verwendung dieser Wirkstoffe für ein Rodentizid ist bisher nur in einer früheren Patentanmeldung des gleichen Anmelders sowie von Y. Shi *et al.* beschrieben worden

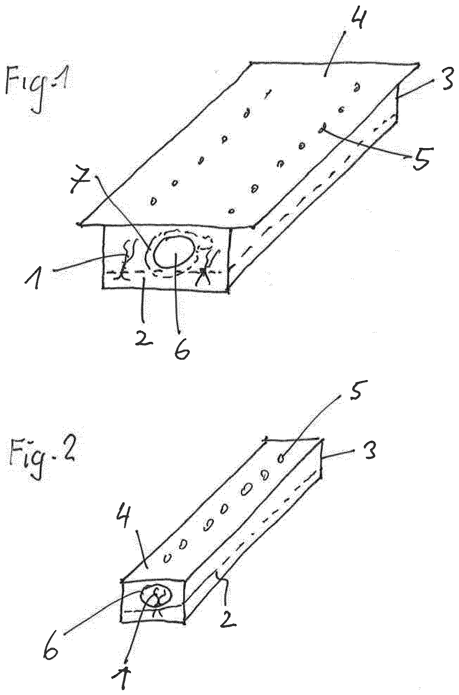

Die Figuren 1 und 2 zeigen zwei verschiedene Ausführungsformen der Erfindung in Schrägansicht.

Die den Wirkstoff enthaltenden Pflanzengewebe 1 in Form von kleinen Pflänzchen oder Stecklingen der Pflanzengattung Rhododendron stecken oder wurzeln in einem Wachstumssubstrat 2. Das Substrat 2 befindet sich am Boden eines weitgehend durchsichtigen Behältnisses 3, welches bevorzugt aus durchsichtigem Kunststoff besteht. Nach oben hin ist das Behältnis 3 von einem Deckel 4 abgeschlossen. Der Deckel 4 kann abnehmbar oder z.B. in Form einer mit den Rändern des Behältnisses 3 verklebten Folie ausgebildet sein. Der Deckel 4 weist Luftlöcher 5 auf. In der dargestellten Form kann das Mittel auch über einen längeren Zeitraum transportiert und gestapelt werden. Zufolge der Luftlöcher 5 und der Lichteinwirkung durch das durchsichtige Behältnis 3 wird das Wachstum oder das Überleben der Pflanze ermöglicht.

Für die Anwendung als Schädlingsbekämpfungsmittel, insbesondere als Rodentizid, gibt es mehrere Möglichkeiten. Zum einen können die Pflänzchen oder Pflanzenbestandteile 1 aus der Verpackung herausgenommen und in die Gänge der Nagetiere eingelegt oder eingepflanzt werden.

Zum anderen kann das Behältnis 3 als Mausefalle verwendet werden. Für diesen Zweck sind als eine Möglichkeit Mausschlupflöcher 6 eingezeichnet, die für den Transport verschlossen sind und vor Ort kann der Verschluss 7, beispielsweise in Form einer Klebefolie, abgezogen und das Mittel in die Nähe der Nagetiergänge gelegt werden.

Die Figur 2 zeigt eine schmälere Ausführungsform des Schädlingsbekämpfungsmittels, wobei der Querschnitt oder die Breite des Behältnisses 3 so gewählt ist, dass das Behältnis 3 mit dem Inhalt in einen gegebenenfalls erweiterten Gang der Nagetiere eingelegt werden kann.

Bei den Behältnissen 3 kann es vorteilhaft sein, wenn es zumindest im unteren Bereich wasserfest ist, sodass das feuchte Wachstumssubstrat 2 nicht das Behältnis 3 aufweichen kann. Der feuchte Erdboden soll den Inhalt nicht sofort zerstören.

Andererseits kann es vorgesehen sein, dass das Behältnis 3 nach einer gewissen Einwirkungszeit durch Feuchtigkeit von außen abgebaut wird, sodass die austreibenden Pflanzenteile 1 des Rhododendron Wurzeln in das umgebende Erdreich bilden können, um so den Rhododendron an- oder auswachsen zu lassen.

Das Pflanzenwachstumssubstrat 2 kann ein feuchter Speicherstoff, wie z.B. Erde oder herkömmliche erhältliche Pflanzensubstrate, sein. Das Wachstumssubstrat 2 kann mit für das Wachstum benötigten Nährstoffen versehen sein.

Alternativ kann auch bloß Wasser oder Feuchtigkeit in einem Wasserspeicher vorgesehen sein, um ein Austrocknen eingelegter Pflanzenteile 1 zu verhindern. Die Pflanzenteile 1 sind bevorzugt jene, die einen erhöhten Gehalt an Wirkstoff aufweisen, wie z.B. auch Blüten.

Im Inneren der Behältnisse 3 können beispielsweise auch weitere Lockstoffe enthalten sein, die die Nagetiere anlocken, um an die Pflanzenbestandteile 1 in dem Behältnis 3 heranzukommen.

Die Ausführungsform gemäß Fig. 1 ist nur beispielhaft zu sehen. Es können zwei oder mehr Reihen von Pflanzengeweben 1 angeordnet sein, und auch die Anzahl der Luftlöcher 5 kann den Anforderungen angepasst sein. Ein Mauseschlupfloch 6 kann sowohl an der Stirnseite angeordnet sein, wie dies in Fig. 1 dargestellt ist, aber auch in Form von Spalten an der Längsseite des Behältnisses 3 oder auch im Deckel 4. Wesentlich ist, dass das Nagetier guten Zugang zu den Pflanzengeweben 1 hat. Bevorzugt ist das Behältnis 3 mit dem Deckel 4 so stabil ausgebildet, dass der Inhalt für den Transport geschützt ist und ein Stapeln möglich ist.

Die Ausführung gemäß Fig. 2 ist ebenfalls rein schematisch anzusehen. Ein derart schmales Gehäuse kann entweder ein Stück Pflanzengewebe 1 enthalten oder auch eine Reihe mehrerer Gewebestücke. Das Mausschlupfloch 6 ist gemäß Zeichnung bevorzugt an einer der schmalen Stirnseiten angeordnet, sodass das Nagetier leicht in das Innere des Behältnisses 3 eindringen kann, um dort die Pflanzengewebestücke zu fressen.

Eine bevorzugte Anwendung der Ausführungsform nach Fig. 2 liegt darin, das Behältnis 3 mit Inhalt derart in einen Nagetiergang zu schieben, dass das Schlupfloch 6 in den Gang hineinragt. Da Nagetiere die Tendenz haben, die Gänge freizuhalten, werden die Nagetiere gerne in das Behältnis 3 eindringen und dort die mit Grayanotoxin beladenen Gewebeteile fressen.

Beispielhafte Abmessungen für das Behältnis 3 gemäß Fig. 2 sind: Länge 20 cm, Breite 6 cm, Höhe 6 cm.

Die verwendeten Pflanzengewebe 1 sind dann geeignet, wenn sie einen für das Nagetier tödlichen Wirkstoff enthalten, wobei insbesondere die Grayanotoxine als Stoffklasse zu nennen sind. Diese Wirkstoffe sind insbesondere in geeigneten Rhododendrenarten enthalten, von denen die entsprechenden Gewebeteile 1 im Behältnis 3 aufbewahrt oder eingepflanzt sein können. Im Rahmen der Erfindung kann es auch vorteilhaft sein, die Gewebeteile 1 mit dem Wirkstoff anzureichern, was entweder durch Züchtung der entsprechenden Pflanzen erfolgen kann, oder durch künstliches Hinzufügen, wie Besprühen oder Einspritzen.

Die Behältnisse 3 haben weiters den Vorteil, dass die mit Wirkstoff beladenen Gewebeteile 1 zum einen nicht frei zugänglich sind, und dass zum anderen der Inhalt des Behältnisses 3 geschützt ist. Wenn das Behältnis 3 aus einem abbaubaren Material besteht, kann es sich beispielsweise innerhalb von ein bis zwei Monaten zersetzen und das Herauswachsen der Pflanzen ermöglichen.

### Bezugszeichenliste

- 1: Pflanzengewebe
- 2: Wachstumssubstrat
- 3: Behältnis
- 4: Deckel
- 5: Luftloch
- 6: Mausschlupfloch
- 7: Verschluss

## Patentansprüche

1. Mittel umfassend ein Rodentizid enthaltend ein Grayanotoxin oder eine Mischung von Grayanotoxinen als Wirkstoff, wobei der Wirkstoff in oder auf Pflanzengewebe als Wirkstoffträger vorliegt, in einem Behältnis (3), wobei das Behältnis (3) den Zutritt von Luft und Licht erlaubt, wobei das Behältnis (3) ein oder mehr Schlupflöcher (6) für den Zutritt von Nagetieren aufweist, **dadurch gekennzeichnet, dass** das Pflanzengewebe (1) in Form von Setzlingen und/oder wuchsfähigen Pflanzenbestandteilen in dem Behältnis (3) vorliegt, dass das Behältnis (3) ein das Wachstum erlaubendes Pflanzensubstrat (2) enthält, und dass das Pflanzengewebe mit natürlichem Gehalt an Wirkstoff, also einem Grayanotoxin oder einer Mischung von Grayanotoxinen, vorgesehen ist.

2. Mittel nach Anspruch 1, **dadurch gekennzeichnet, dass** das Pflanzengewebe von einer Pflanze aus der Familie Ericaceae, insbesondere aus der Gattung Rhododendron, stammt.

3. Mittel nach Anspruch 2, **dadurch gekennzeichnet, dass** als Pflanzengewebe keimfähige Abschnitte einer Rhododendronpflanze, wie Wurzel, Stängel, Blatt und/oder Blüte vorgesehen ist.

4. Mittel nach einem der Ansprüche 1 bis 3, **dadurch gekennzeichnet, dass** das Grayanotoxin oder die Mischung aus Grayanotoxinen im Pflanzengewebe mit einem Gehalt von wenigstens 0,0005 Gew.-%, bevorzugt zwischen 0,0005 Gew.-% und 2 Gew.-%, enthalten ist.

5. Mittel nach einem der Ansprüche 1 bis 4, **dadurch gekennzeichnet, dass** wenigstens ein Schlupfloch (6) durch einen entfernbaren Verschluss (7) abgedeckt ist.

6. Mittel nach einem der Ansprüche 1 bis 5, **dadurch gekennzeichnet, dass** das Behältnis (3) eine wasserfeste Bodenschale aufweist, die oben von einem Deckel (4) oder einer Folie abgeschlossen ist und wobei das Behältnis mit Inhalt für den Transport stapelbar ist.

7. Mittel nach einem der Ansprüche 1 bis 6, **dadurch gekennzeichnet, dass** das Behältnis (3) und der Deckel im Erdboden bei Feuchtigkeit zersetzbar ist, um das An- und Auswachsen des Pflanzengewebes zu ermöglichen.

8. Mittel nach einem der Ansprüche 1 bis 7, **dadurch gekennzeichnet, dass** wenigstens ein Teil des Pflanzengewebes (1) abgestorbenes, nicht mehr wachstumsfähiges Pflanzengewebe ist.

## Claims

1. An agent comprising a rodenticide, the rodenticide containing a grayanotoxin or a mixture of grayanotoxins as an active substance, wherein the active substance is provided in or on plant tissue as an active substance carrier, in a container (3), wherein the container (3) allows air and light to enter, wherein the container (3) has one or more entrance openings (6) for the access of rodents, **characterized in that** the plant tissue (1) is provided in the form of seedlings and/or plant parts with the capacity to grow in the container (3), **in that** the container (3) contains a plant substrate (2) allowing growth, and **in that** the plant tissue is provided to naturally contain the active substance, i.e. a grayanotoxin or a mixture of grayanotoxins.

2. The agent according to claim 1, **characterized in that** the plant tissue comes from a plant belonging to the Ericaceae family, in particular the genus rhododendron.

3. The agent according to claim 2, **characterized in that** portions capable of germination of a rhododendron plant, e.g. roots, stems, leaves and/or flowers, are provided as plant tissue.

4. The agent according to one of claims 1 to 3, **characterized in that** the content of the grayanotoxin or the mixture of grayanotoxins in the plant tissue is at least 0.0005 wt. %, preferably between 0.0005 wt. % and 2 wt. %.

5. The agent according to one of claims 1 to 4, **characterized in that** at least one entrance opening (6) is covered by a removable closure (7).

6. The agent according to one of claims 1 to 5, **characterized in that** the container (3) has a waterproof bottom tray, which is closed from above by a lid (4) or a foil, and wherein the container including its contents is stackable for transport.

7. The agent according to one of claims 1 to 6, **characterized in that** the container (3) and the lid is decomposable in the ground by humidity, in order to allow the plant tissue to form roots and grow.

8. The agent according to one of claims 1 to 7, **characterized in that** at least a part of the plant tissue (1) is dead plant tissue, which has lost its capability to grow.

## Revendications

1. Agent comprenant un rodenticide contenant une grayanotoxine ou un mélange de grayanotoxines en tant que substance active, la substance active étant présente dans ou sur un tissu végétal en tant que support de substance active, dans un récipient (3), le récipient (3) permettant l'entrée d'air et de lumière, le récipient (3) présentant un ou plusieurs trous de passage (6) pour l'entrée de rongeurs, **caractérisé en ce que** le tissu végétal (1) est présent sous la forme de plants et/ou de composants végétaux capables de croître dans le récipient (3), **en ce que** le récipient (3) contient un substrat végétal (2) permettant la croissance et **en ce que** le tissu végétal est prévu avec une teneur naturelle en substance active, à savoir une grayanotoxine ou un mélange de grayanotoxines.

2. Agent selon la revendication 1, **caractérisé en ce que** le tissu végétal provient d'une plante de la famille des Éricacées, en particulier du genre rhododendron.

3. Agent selon la revendication 2, **caractérisé en ce qu'**il est prévu, comme tissu végétal, des sections germinatives d'une plante rhododendron, comme une racine, une tige, une feuille et/ou une fleur.

4. Agent selon l'une des revendications 1 à 3, **caractérisé en ce que** la grayanotoxine ou le mélange de grayanotoxines est contenu dans le tissu végétal avec une teneur d'au moins 0,0005 % en poids, de préférence entre 0,0005 % en poids et 2 % en poids.

5. Agent selon l'une des revendications 1 à 4, **caractérisé en ce qu'**au moins un trou de passage (6) est recouvert par une fermeture amovible (7).

6. Agent selon l'une des revendications 1 à 5, **caractérisé en ce que** le récipient (3) présente une coque de fond étanche à l'eau, qui est fermée au-dessus par un couvercle (4) ou une feuille, et le récipient avec son contenu peut être empilé pour le transport.

7. Agent selon l'une des revendications 1 à 6, **caractérisé en ce que** le récipient (3) et le couvercle peuvent se décomposer dans le sol en présence d'humidité, afin de permettre l'enracinement et la croissance du tissu végétal.

8. Agent selon l'une des revendications 1 à 7, **caractérisé en ce qu'**au moins une partie du tissu végétal (1) est un tissu végétal mort, qui n'est plus apte à croître.
